# EUROPEAN PATENT SPECIFICATION

(11) **EP 1 766 627 B1**
(45) Date of publication and mention of the grant of the patent: **08.07.2009**
(21) Application number: 05746761.5
(22) Date of filing: 27.05.2005
(51) Int. Cl.: G11B 33/04

(54) **SECURITY APPARATUS**
SICHERHEITSVORRICHTUNG
APPAREIL DE SECURITE

(30) Priority: 29.05.2004 GB 0412115
(43) Date of publication of application: 28.03.2007
(73) Proprietor: Dubois Limited, Corby, Northants NN17 5AE (GB)
(72) Inventor: JOHNSTON, Robert, Geddington, Northants NN14 1AU (GB); HEIN, John, Leeds LS29 6EX (GB)
(74) Representative: Unwin, Stephen Geoffrey
(86) International application number: PCT/GB2005/002119
(87) International publication number: WO 2005/119684

(56) References cited:
- EP-A- 0 729 897
- GB-A- 738 375
- GB-A- 741 575
- GB-A- 2 272 889
- US-A- 4 401 323
- US-A1- 2001 021 167
- US-A1- 2002 027 358
- US-A1- 2003 038 042

## Description

### TECHNICAL FIELD

This invention relates to apparatus for retaining an article, e.g. information storage media, for instance whilst the article is being stored and/or on display in a retail outlet.

### BACKGROUND ART

Apparatus for retaining various forms of information storage media is known. WO02/39451 describes various forms of apparatus for holding information storage media such as CDs and DVDs and security devices for use therewith. WO02/39451 also describes a security device arranged to lock a CD or DVD container in a closed configuration and/or lock the CD or DVD to the container. Once the security device has been released, it may be withdrawn from the container for disposal or re-use in another CD or DVD container, so the container can be freely opened and closed to permit access to the CD or DVD therein and/or to permit the CD or DVD to be removed from the container.

WO02/39451 describes apparatus in which information storage media, such as a CD or DVD, is engaged and held via an aperture therein, e.g. a central hole in a disk. The present invention provides an alternative which is also capable of holding articles without such an aperture and which may not be circular.

### SUMMARY OF INVENTION

According to the invention, there is provided apparatus for securely retaining an article, the apparatus comprising a base portion having locating means for receiving and locating thereon an article of a particular shape, the locating means comprising an upstand shaped so as to inhibit finger access to at least part of the perimeter of an article installed therein, a plurality of engagement members arranged around the perimeter of the locating means for inhibiting removal of the article from the locating means, at least one of the engagement members being movable between a first position in which it assists in retaining the article within the locating means and a second position in which it does not, the apparatus being adapted to receive a security member movable between a securing position in which it prevents movement of said at least one of the engagement members from the first position to the second position and a release position in which it permits movement of said at least one of the engagement members from the first position to the second position.

Preferably, the security device is similar to that shown and described in relation to Figures 1-3, 11 or 23 of WO02/39451.

Preferably, the security device comprises a locking mechanism similar to that shown and described in relation to Figures 11-15 and Figures 19A-19B of WO02/39451.

Preferably, the security device is such as to be releasable from the locked position thereof by release apparatus similar to that shown and described in relation to Figures 34-37 of WO02/39451. Alternatively, the release apparatus may be of a form similar to that described in GB0324341.7 (publication No. WO2005/040531).

Other features of the invention will be apparent from the following description.

### BRIEF DESCRIPTION OF DRAWINGS

The invention will now be further described, merely by way of example, with reference to the accompanying drawings in which:
Figure 1 is a perspective view of a first embodiment of apparatus according to the present invention. Figure 1 also shows a games cartridge 1 retained on the apparatus and secured therein by means of a security member 2.
Figure 2 is a similar view to Figure 1 but showing the security member 2 partially removed and the games cartridge 1 ejected to a raised position ready for removal;
It should be noted that Figures 1 and 2 also show a known form of a 3-side holder 3 for holding another form of games cartridge 4 therein (as shown in Figure 1) in a conventional manner. Whilst such a 3-sided holder 3 may be supplied in addition it does not form part of the present invention;
Figures 3 and 4 show enlarged, perspective views from opposite directions of part of the apparatus shown in Figures 1 and 2 with the games cartridge 1 omitted so as to show ejection means; and
Figure 5 is a perspective view corresponding to Figure 3 of a second embodiment of apparatus according to the present invention.

### DESCRIPTION OF PREFERRED EMBODIMENTS

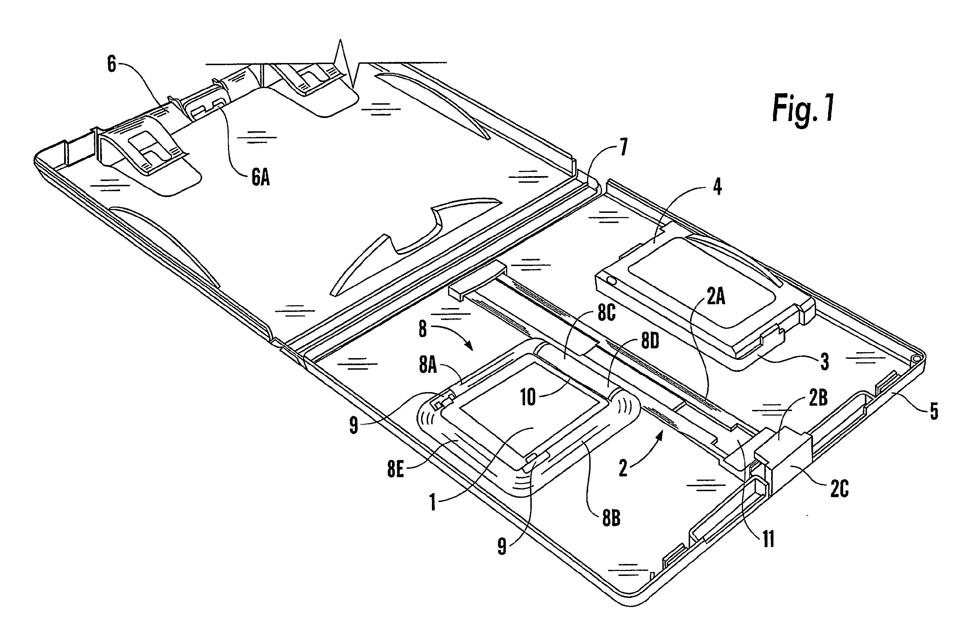

Figures 1-4 show a first embodiment of apparatus for retaining an article, in this case a substantially rectangular games cartridge 1, within a container comprising a base portion 5 and a lid portion 6 which are connected by a hinge portion 7. The lid portion 6 may be moved from the open position shown to a closed position in which it fits over the base portion 5 in a known manner and as widely used (in a variety of shapes and sizes) to house CDs, DVDs and other goods. Such containers are typically formed by injection moulding from polypropylene and are referred to as video-style library boxes within the trade.

The apparatus shown in Figures 1-4 comprises locating means in the form on an upstand 8 on the base portion 5, the upstand being shaped to receive and locate a particular article, e.g. a games cartridge 1, as shown. Preferably, the upstand 8 is a close fit around the perimeter of the article 1 and is arranged to inhibit access to the perimeter of an article 1 held therein. Preferably, the upstand 8 extends around the entire perimeter of the cartridge 1. It is preferably continuous but may also be discontinuous. The upstand thus prevents a user's fingers from gaining a purchase on the edges of the article 1 when in the retained position as shown in Figure 1.

The upstand 8 has a plurality of engagement members for inhibiting removal of the games cartridge 1. In the embodiment shown, two resilient arms 9 are provided on opposite sides 8A, 8B of the recess defined by the upstand 8 towards one side 8E thereof. The upper ends of the resilient arms 9 are angled so the arms are flexed outwards as a cartridge 1 is pressed into the recess. Once the cartridge 1 has been pressed into place, the arms 9 revert to their unflexed position and detents 9A towards the upper ends thereof lie over an upper surface of the cartridge 1 at opposite edges thereof to prevent upward movement of the cartridge 1 out of the recess.

The cartridge 1 is preferably installed in the apparatus by being located over the locating means and then simply pressed into place by a force substantially normal to the plane of the base portion 5 so the cartridges can be installed by high speed automated pick and place machinery.

Third engagement means is provided on a third side 8C of the recess defined by the upstand 8 opposite side 8E. This also comprises a detent or lip 10 which extends over the upper surface of the cartridge 1 adjacent the third side 8C to assist in retaining the cartridge 1 in the recess. The lip 10 is carried by a part 8D of the upstand 8 which is movable between a first, stable position in which the lip 10 assists in retaining the cartridge 1 in the recess and a second stable position in which it does not. The part 8D of the upstand may, for example, be rotatable about its connection with the base portion 5 so as to move the lip 10 outwards to a position in which the lip 10 no longer lies over the upper surface of the cartridge 1. This end of the cartridge 1 can thus be lifted and the other end of the cartridge slid out from beneath the detents 9A of the resilient arms 9.

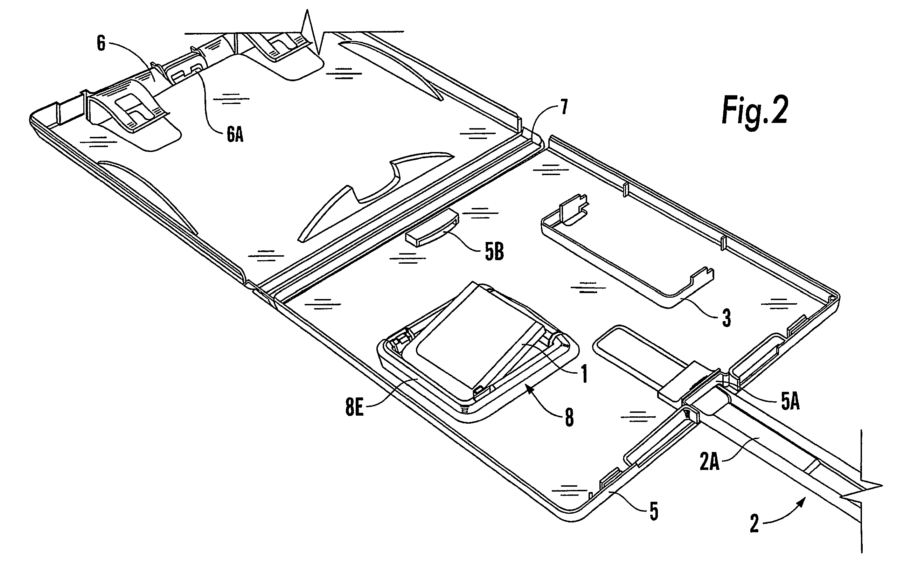

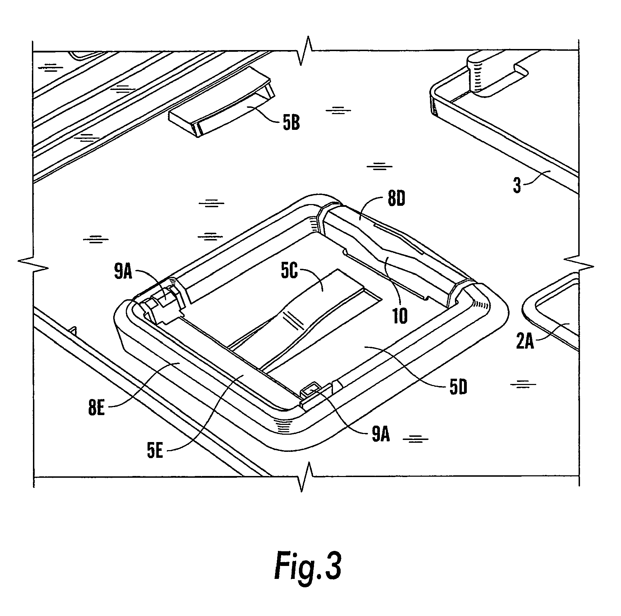

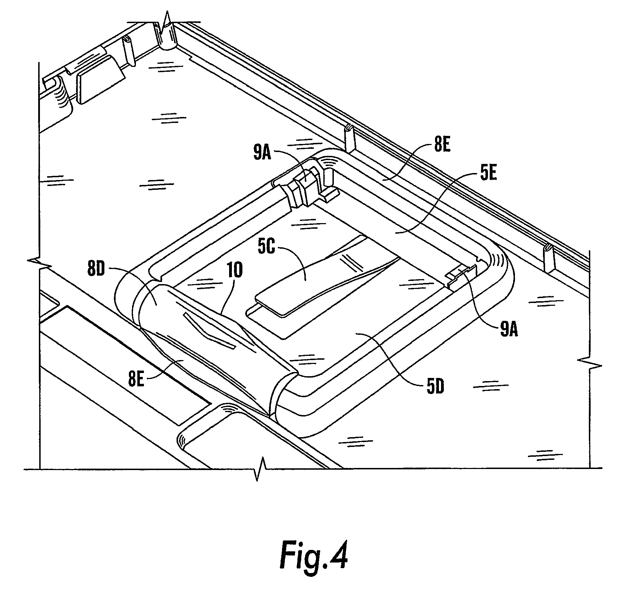

Preferably, the apparatus is provided with ejection means to assist in lifting the cartridge 1 out of the recess when the lip 10 is moved to the second position. In the embodiment shown in Figures 3 and 4, the ejection means comprises resilient means in the form of an arm 5C resiliently cantilevered from the base portion 5. When the cartridge 1 is held in the recess, elastic energy is stored in the arm 5C and when the lip 10 is moved outwards, the arm 5C lifts one end of the cartridge 1 as it reverts to its unflexed position (as shown in Figure 2). The edges of the cartridge 1 towards the raised end thereof can thus be grasped by a user's fingers and the cartridge 1 slid out from beneath detents 9A of the resilient arms 9.

The base 5D within the upstand 8 is preferably flat over most of its area but may be inclined downwards in the region 5E towards side 8E of the upstand to accommodate downward movement of an edge of the cartridge 1 as the cartridge is tilted to the position shown in Figure 2. To facilitate the formation of the inclined area 5E, the area 5D of the base may be formed at a slightly raised level, e.g. by 0.5-1.0mm, above the level of the base portion 5 outside the upstand 8.

The apparatus is also preferably arranged to receive a security device 2 similar to that shown in Figures 1-3, 11 or 23 of WO02/39451 comprising a long arm 2A and a short arm 2B extending parallel to each other from a head portion 2C. The apparatus comprises a first slot 5A in an edge of the base portion 5 through which the long arm 2A is located and a second slot 5B adjacent an opposite edge of the base 5 for locating and receiving the distal end of the long arm 2A when the security device is fully inserted into the apparatus (as shown in Figure 1).

The upstand 8 and the slots 5A and 5B are positioned so that, when installed, the long arm 2A of the security members lies adjacent an outer edge of the third side 8C of the upstand 8 so as to prevent said part 8D of the upstand from moving outwards from said first position to the second position. The security device 2 thus effectively locks the third engagement means in said first position so the cartridge 1 cannot be removed from the recess defined by the upstand 8.

In a preferred arrangement, the arm 2A of the security device fits beneath a projection 8E on the outer side of the part 8D as shown in Figure 4 to prevent part 8D from being rotated outwards.

The security device 2 is preferably provided with a locking mechanism 11, which may be carried on the long arm 2A, to lock it in the fully inserted position once it has been moved to that position. The locking mechanism is preferably of the type shown in Figures 11-15 and Figures 19A-19B of WO02/39451 and can be released by the same release apparatus used to release such a locking device from a CD or DVD container.

The second arm 2B of the security device 2 is arranged to engage the lid portion 6, via a slot 6A therein, when the lid 6 is in the closed position. The security member 2 thus acts to hold the lid 6 in the closed position and it cannot be opened until the locking mechanism 11 has been unlocked and the security member 2 at least partially withdrawn so that the second arm 2B disengages from the lid portion 6.

Figure 2 shows the security device 2 withdrawn to a position in which it no longer blocks outward movement of said third side 8C of the upstand.

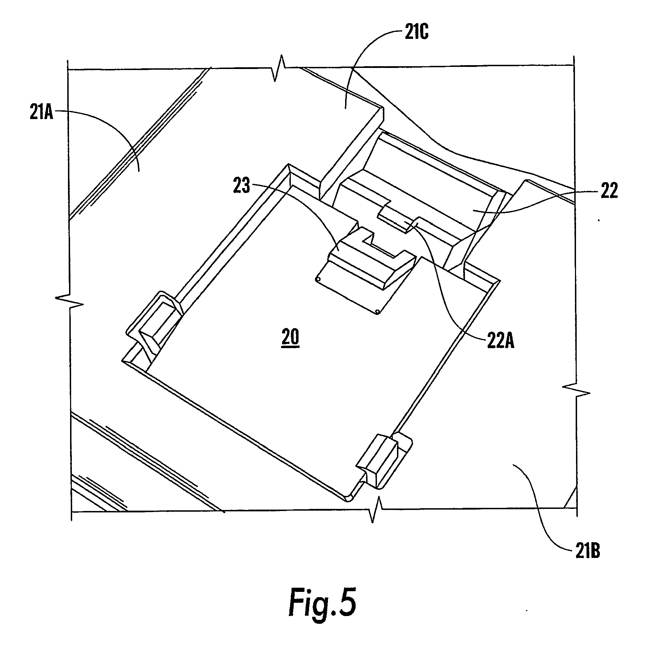

Figure 5 shows a second embodiment in which a recess 20 is surrounded by an upstand 21. Resilient arms 22A and 22B are provided in first and second sides 21A and 21 B of the upstand 21. Part of a third side 21C of the upstand comprises an over-centre or toggle mechanism 22 moveable by depression between a first position (not shown) in which a projection 22A thereof assists in preventing removal of a cartridge from the recess 20 and a second position (shown in Figure 5) in which the projection 22A is moved outwards so as to permit an end of a cartridge within the recess 20 to be lifted.

In this case, in place of the resilient ejection arm 5C described above, the over-centre mechanism 22 is provided with a lever arm 23 which pivots to lift one end of the cartridge 1 as the over-centre mechanism is pressed to move the projection 22A outwards. In other cases, both a resilient ejection arm and a lever arm may be provided. The lever arm is preferably connected to the over-centre mechanism 22 (or other moveable engagement member) so as to be actuated by movement thereof to the second position.

When a cartridge 1 is placed into the recess 20, it presses down the lever arm 23 which acts to return the over-centre mechanism 22 to the first position. This embodiment is also arranged so that the over-centre mechanism 23 can be secured in the first position, in which a cartridge is retained in the recess 20, by the insertion of a security device 2 similar to that shown in the preceding figures. In this case, slots (not shown) are provided to enable the longer arm 2A of the security device to be slid beneath the third side 21C of the upstand and beneath the over-centre mechanism 22 to prevent the latter from being depressed.

It will be appreciated that other forms of moveable engagement member for releasably engaging one edge of the cartridge 1 can be provided in place of those shown in Figures 1-4 and Figure 5. In some cases, these may be actuated (to permit removal of the cartridge 1) by depression of a button or other actuation member. In other cases, they may be actuated by lifting a tab or other actuation member, e.g. to pivot part of the mechanism outwards and/or to cause another part of the mechanism to be depressed. In each case, the arrangement is preferably designed so actuation thereof can be blocked by the location of a removable security member located adjacent and/or beneath part of the mechanism.

The embodiments described above are designed to hold information storage media in the form of a substantially flat, rectangular cartridge. Similar apparatus can be provided for holding substantially flat articles of other polygonal shapes or a disk-shaped article.

The cartridge itself may comprise a memory device of a variety of types. In some cases, these may include electronic chips or circuits. In other cases, these may include optically readable devices. A cartridge which houses a disk-shaped component may also be used. In this case, the locating means may include a member for locating an aperture in the disk-shaped components and/or in the cartridge. The cartridge may be polygonal, circular or of some other shape.

In each of the above cases, the upstand is preferably shaped to provide a recess having a perimeter of similar shape to the perimeter of the cartridge and, most preferably, being a close fit about the perimeter thereof so as to inhibit access to the edges of the cartridge until it has been ejected to a raised position. The upstand is also provided with a plurality of engagement members arranged around the perimeter of the recess for inhibiting removal of the cartridge, at least one of which is moveable between first and second positions upon actuation of a release mechanism as described above.

The apparatus described above preferably has an EAS tag or label (not shown) affixed thereto. This may be an acoustic-magnetic (AM) device, for instance in the form of a label or strip applied to an inner surface of the base portion 5 or to part of the security device 2 so that it cannot be removed by a potential thief when the apparatus is locked in a closed configuration.

Other types of tag may also be used, e.g. an electromagnetic (EM) device or a radio frequency (RF) device, e.g. in the form of a flat coil of wire which acts as a transponder. Such coils typically have a diameter of around 50mm so, in some cases, it may be desirable to locate the goods held by the container off-centre or towards one side of the container to provide more room for the coil. In another arrangement, the transponder may comprise a coil wound around a ferrite core and may be carried by the security device, e.g. as described in GB0215397.1 PCT/GB2003/002885.

As described above, the security device preferably prevents removal of the cartridge by preventing movement of the moveable engagement member to the second position. However, it may alternatively, or additionally, be arranged to prevent removal of the cartridge by blocking access to the cartridge and/or obstructing movement of the cartridge from the locating means.

## Claims

1. Apparatus for securely retaining an article (1), the apparatus comprising a base portion (5) with locating means thereon for receiving and locating an article (1) of a particular shape, the locating means (8) comprising an upstand shaped so as to inhibit finger access to at least part of the perimeter of an article (1) installed therein, a plurality of engagement members (9, 10) arranged around the perimeter of the locating means (8) for inhibiting removal of the article (1) from the locating means (8), at least one (10) of the engagement members being movable between a first position in which it assists in retaining the article (1) within the locating means (8) and a second position in which it does not, the apparatus being adapted to receive a security member (2) movable between a securing position in which it prevents movement of said at least one (10) of the engagement members from the first position to the second position and a release position in which it permits movement of said at least one (10) of the engagement members from the first position to the second position.

2. Apparatus as claimed in claim 1 comprising ejection means (5C) for ejecting at least part of the article (1) to a raised position upon movement of said at least one engagement member (10) to a said second position.

3. Apparatus as claimed in claim 2 in which the ejection means (5C) comprises a resilient member.

4. Apparatus as claimed in claim 2 or 3 in which the ejection means comprises a lever (23) arranged to be moved to the raised position as said at least one (22) of the engagement members moves from said first position to said second position.

5. Apparatus as claimed in any preceding claim wherein said at least one (22) of the engagement members is movable between a first stable position in which it assists in retaining the article (1) within the locating means (8) and a second stable position in which it does not.

6. Apparatus as claimed in any preceding claim arranged to receive the security member (2) adjacent said at least one (10) of the engagement members so as to block movement thereof from said first position to said second position and/or block actuation of a mechanism for moving said at least one (10) of the engagement members from said first position to said second position.

7. Apparatus as claimed in claim 6 in which the security member (2) comprises a locking mechanism (11) for locking it in the securing position.

8. Apparatus as claimed in any preceding claim in which said at least one engagement member (10) is rotatable from said first position to said second position.

9. Apparatus as claimed in any preceding claim in which said at least one engagement member comprises an over-centre or toggle mechanism (22) for moving it from said first position to said second position.

10. Apparatus as claimed in any preceding claim in which one or more of the engagement members (9) comprises a resilient arm.

11. Apparatus as claimed in claim 10 in which the upper end (9A) of the resilient arm (9) is angled so when engaged by the article (1), it is flexed outwards to permit the article (1) to be located in the locating means (8).

12. Apparatus as claimed in claim 10 or 11 in which an upper end of the resilient arms (9) is provided with a detent arranged to lie over an upper surface of an article (1) when installed in the locating means (8).

13. Apparatus as claimed in any preceding claim in which the locating means (8) defines a recess having a polygonal, e.g. rectangular, perimeter.

14. Apparatus as claimed in any preceding claim in which the upstand (8) is configured so as to extend around the entire perimeter of an article (1) installed in the locating means.

15. Apparatus as claimed in any preceding claim comprising a lid portion (6) connected to the base portion (5) by a hinge portion (7), the lid portion (6) being movable between an open position and a closed position with respect to the base portion (5).

16. Apparatus as claimed in claim 15 wherein the lid portion (6) is adapted to be held in the closed position by said security member (2) when installed therein.

17. Apparatus as claimed in any preceding claim in the form of a plastic, injection moulding.

18. Apparatus as claimed in any preceding claim in combination with a security member (2).

19. Apparatus as claimed in any preceding claim in combination with an article (1) mounted within said locating means (8).

20. Apparatus as claimed in claim 19 in which the article (1) is a games cartridge.

## Patentansprüche

1. Vorrichtung zum sicheren Halten eines Artikels (1), wobei die Vorrichtung einen Basisteil (5) mit Positionierelementen zur Aufnahme und Positionierung eines Artikels (1) mit einer bestimmten Form daran umfasst, wobei die Positionierelemente (8) eine Aufkantung haben, die so geformt ist, dass der Fingerzugriff zu mindest einem Teil des Umfangs eines darin installierten Artikels (1) verhindert wird, wobei eine Vielzahl von Eingriffsgliedern (9, 10) zur Verhinderung der Entnahme des Artikels (1) aus der Positioniervorrichtung (8) um den Umfang des Positionierelements (8) angeordnet sind, wobei mindestens eines (10) der Eingriffsglieder zwischen einer ersten Position, in der es zum Halten des Artikels (1) innerhalb der Positioniervorrichtung (8) beiträgt und einer zweiten Position, in der es das nicht tut, beweglich ist, wobei die Vorrichtung darauf ausgelegt ist, ein Sicherungsglied (2) aufzunehmen, das zwischen einer Befestigungsposition, in der es eine Bewegung von mindestens einem (10) der Eingriffsglieder von der ersten Position zur zweiten Position und einer Freigabeposition, in der es Bewegung des mindestens einen (10) der Eingriffsglieder von der ersten zur zweiten Position ermöglicht.

2. Vorrichtung gemäß Anspruch 1 mit einem Ausstoßmittel (5C) zum Ausstoß von mindestens einem Teil des Artikels (1) in eine erhöhte Position bei Bewegung des mindestens einen (10) der Eingriffsglieder in Position.

3. Vorrichtung gemäß Anspruch 2, bei der das Ausstoßmittel (5C) ein federelastisches Element beinhaltet.

4. Vorrichtung gemäß Anspruch 2 und 3, bei der das Ausstoßmittel einen Hebel (23) hat, der so angeordnet ist, dass er in die erhobene Position bewegt werden kann wenn das mindestens eine (22) der Eingriffsglieder sich von der ersten Position in die zweite Position bewegt.

5. Vorrichtung gemäß einem der vorhergehenden Ansprüche, bei dem das mindestens eine (22) der Eingriffsglieder zwischen der ersten stabilen Position, in der es dazu beiträgt, den Artikel (1) im Positionierelement (8) zu halten, und einer zweiten stabilen Position, in der es die nicht tut, beweglich ist.

6. Vorrichtung gemäß einem der vorhergehenden Ansprüche, die so angeordnet ist, dass sie das Sicherungsglied (2) neben dem mindestens einen (10) der Eingriffsglieder aufnimmt, so dass dessen Bewegung von der ersten Position in die zweite Position blockiert wird und/oder die Auslösung des Mechanismus zur Bewegung des mindestens einen (10) der Eingriffsglieder von der ersten Position in die zweite Position blockiert wird.

7. Vorrichtung gemäß Anspruch 6, bei der das Sicherungsglied (2) einen Positioniermechanismus (11) zu dessen Positionierung in der Sicherungsposition hat.

8. Vorrichtung gemäß einem der vorhergehenden Ansprüche, bei der das mindestens eine Eingriffsglied (10) von der ersten Position in die zweite Position gedreht werden kann.

9. Vorrichtung gemäß einem der vorhergehenden Ansprüche, bei der das mindestens eine Eingriffsglied einen Sprungfeder- oder Kniehebel-Mechanismus (22) zur Bewegung von der ersten Position in die zweite Position hat.

10. Vorrichtung gemäß einem der vorhergehenden Ansprüche, bei der eines oder mehrere der Eingriffsglieder (9) einen Federarm haben.

11. Vorrichtung gemäß Anspruch 10, bei der das obere Ende (9A) des Federarms (9) abgewinkelt ist, so dass es, wenn der Artikel (1) zur Anlage gelangt, nach außen gebogen wird, so dass der Artikel (1) sich im Positionierelement (8) positionieren kann.

12. Vorrichtung gemäß Anspruch 10 oder 11, bei der ein oberes Ende des Federarms (9) mit einem beweglichen Anschlag ausgerüstet ist, der so angeordnet ist, dass er bei Installation im Positionierelement (8) über einer oberen Oberfläche eines Artikels (1) liegt.

13. Vorrichtung gemäß einem der vorhergehenden Ansprüche, bei der das Positionierelement (8) eine Ausnehmung mit einem polyognalen, d.h. rechteckigem Umfang, bildet.

14. Vorrichtung gemäß einem der vorhergehenden Ansprüche, bei der die Aufkantung (8) so konfiguriert ist, dass sie sich um den gesamten Umfang eines im Positionierelement installierten Artikels (1) erstreckt.

15. Vorrichtung gemäß einem der vorhergehenden Ansprüche mit einem Deckelteil (6), der mit dem Basisteil (5) durch einen Gelenkteil (7) verbunden ist, wobei der Deckelteil (6) zwischen einer geöffneten Position und einer geschlossenen Position in Bezug auf den Basisteil (5) beweglich ist.

16. Vorrichtung gemäß Anspruch 15, bei der der Deckelteil (6) darauf ausgelegt ist von dem Sicherungsglied (2) in der geschlossenen Position gehalten zu werden, wenn er darin installiert ist.

17. Vorrichtung gemäß einem der vorhergehenden Ansprüche in Form eines Kunststoffspritzgussteils.

18. Vorrichtung gemäß einem der vorhergehenden Ansprüche in Kombination mit einem Sicherungsglied (2).

19. Vorrichtung gemäß einem der vorhergehenden Ansprüche in Kombination mit einem Artikel (1), der auf das Positionierelement (8) montiert ist.

20. Vorrichtung gemäß Anspruch 19, bei dem der Artikel (1) eine Spielekassette ist.

## Revendications

1. Un appareil pour l'immobilisation d'un article (1), comprenant un socle (5) doté de dispositifs de positionnement pour recevoir et positionner un article (1) d'une certaine forme, le dispositif de positionnement (8) comprenant un socle façonné de façon à empêcher l'accès avec un doigt à, tout au moins, une partie du périmètre d'un article (1) installé à l'intérieur, une série d'éléments d'engagement (9, 10) disposés sur l'intégralité du périmètre du dispositif de positionnement (8) pour empêcher l'enlèvement de l'article (1) du dispositif de positionnement (8), au moins un (10) des éléments d'engagement pouvant être déplacé d'une position initiale dans laquelle il contribue à l'immobilisation de l'article (1) au sein du dispositif de positionnement (8) à une deuxième position dans laquelle il n'y contribue pas, cet appareil ayant été adapté pour recevoir un dispositif de sécurité (2) pouvant être déplacé entre une position d'immobilisation, dans laquelle il empêche le déplacement dans la deuxième position, et une position de dégagement, dans laquelle il permet le déplacement d'au moins un (10) des éléments d'engagement de la première position à la deuxième position.

2. Un appareil conforme à la revendication 1 comprenant un dispositif d'éjection (5C) permettant d'éjecter au moins une partie de l'article (1) jusqu'à une position soulevée lors du déplacement d'au moins un des éléments d'engagement (10) dans la susdite deuxième position.

3. Un appareil conforme à la revendication 2 dans lequel le dispositif d'éjection (5C) comprend un élément élastique.

4. Un appareil conforme aux revendications 2 ou 3 dans lequel le dispositif d'éjection (5C) comprend un levier (23) disposé de façon à se placer dans la susdite position soulevée, au moins un (22) des éléments d'engagement se déplaçant de la première position à la deuxième position.

5. Un appareil conforme à une quelconque des revendications précédentes, dans lequel au moins un (22) des éléments d'engagement peut être déplacé d'une première position stable, dans laquelle il contribue à l'immobilisation de l'article (1) au sein du dispositif de positionnement (8), à une deuxième position stable dans laquelle il n'y contribue pas.

6. Un appareil conforme à une quelconque des revendications précédentes, disposé de façon à recevoir le dispositif de sécurité (2) dans un emplacement adjacent à au moins un (10) des éléments d'engagement, de façon à en bloquer le déplacement de la ladite première position à ladite deuxième position et/ou à bloquer l'activation d'un mécanisme pour déplacer au moins un (10) des éléments d'engagement de la ladite première position à ladite deuxième position.

7. Un appareil conforme à la revendication 6 dans lequel le dispositif de sécurité (2) comprend un mécanisme de verrouillage (11) pour le bloquer dans la position d'immobilisation.

8. Un appareil conforme à une quelconque des revendications précédentes, dans lequel on peut effectuer la rotation d'au moins un (10) élément d'engagement de la ladite première position à ladite deuxième position.

9. Un appareil conforme à une quelconque des revendications précédentes, dans lequel au moins un élément d'engagement comprend un mécanisme basculeur (22) pour le déplacer de la ladite première position à ladite deuxième position.

10. Un appareil conforme à une quelconque des revendications précédentes, dans lequel un ou plusieurs éléments d'engagement (9) comprennent un bras élastique.

11. Un appareil conforme à la revendication 10 dans lequel l'extrémité supérieure (9A) du bras élastique (9) est inclinée de sorte que lorsqu'elle est engagée par l'article (1), elle fléchit vers l'extérieur pour permettre à l'article (1) de se placer dans le dispositif de positionnement (8).

12. Un appareil conforme à la revendication 10 ou 11 dans lequel une extrémité supérieure des bras élastiques (9) est munie d'un cran disposé pour être placé au-dessus d'une surface supérieure d'un article (1) lorsqu'il est installé dans le dispositif de positionnement (8).

13. Un appareil conforme à une quelconque des revendications précédentes, dans lequel le dispositif de positionnement (8) définit un évidement au pourtour polygonal ; p.ex. : rectangulaire.

14. Un appareil conforme à une quelconque des revendications précédentes, dans lequel le socle (8) est configuré de façon à s'étendre sur l'intégralité du périmètre d'un article (1) installé dans le dispositif de positionnement.

15. Un appareil conforme à une quelconque des revendications précédentes comprenant un couvercle (6) relié à la base (5) par une charnière (7), le couvercle (6) pouvant être déplacé d'une position ouverte à une position fermée relativement à la base (5).

16. Un appareil conforme à la revendication 15 dans lequel le couvercle (6) est adapté de façon à pouvoir être maintenu dans sa position fermée par ledit dispositif de sécurité (2) lorsqu'il est installé dedans.

17. Un appareil conforme à une quelconque des revendications précédentes sous forme de pièce en matière plastique moulée par injection.

18. Un appareil conforme à une quelconque des revendications précédentes conjointement avec un dispositif de sécurité (2).

19. Un appareil conforme à une quelconque des revendications précédentes conjointement avec un article (1) monté dans ledit dispositif de positionnement (8).

20. Un appareil conforme à la revendication 19 dans lequel l'article (1) est une cartouche de jeu.
